(19) Europäisches Patentamt / European Patent Office / Office européen des brevets

(11) **EP 1 745 366 B1**

(12) **FASCICULE DE BREVET EUROPEEN**

(45) Date de publication et mention de la délivrance du brevet:
**04.11.2009 Bulletin 2009/45**

(51) Int Cl.:
***G06F 7/72*** *(2006.01)*

(21) Numéro de dépôt: **05748321.6**

(22) Date de dépôt: **11.05.2005**

(86) Numéro de dépôt international:
**PCT/IB2005/001409**

(87) Numéro de publication internationale:
**WO 2005/109183 (17.11.2005 Gazette 2005/46)**

(54) **PROCEDE DE PROTECTION D"UN ENSEMBLE CRYPTOGRAPHIQUE PAR MASQUAGE HOMOGRAPHIQUE**

VERFAHREN ZUM SCHUTZ EINER KRYPTOGRAPHISCHEN EINHEIT MITTELS HOMOGRAPHISCHER MASKIERUNG

METHOD FOR PROTECTING A CRYPTOGRAPHIC ASSEMBLY BY A HOMOGRAPHIC MASKING

(84) Etats contractants désignés:
**AT BE BG CH CY CZ DE DK EE ES FI FR GB GR HU IE IS IT LI LT LU MC NL PL PT RO SE SI SK TR**

(30) Priorité: **11.05.2004 EP 04291204**

(43) Date de publication de la demande:
**24.01.2007 Bulletin 2007/04**

(73) Titulaire: **Gemalto SA
92190 Meudon (FR)**

(72) Inventeur: **Courtois, N.,
92197 Meudon Cedex (FR)**

(56) Documents cités:
- TRICHINA E ET AL: "SIMPLIFIED ADAPTIVE MULTIPLICATIVE MASKING FOR AES" LECTURE NOTES IN COMPUTER SCIENCE, SPRINGER VERLAG, NEW YORK, NY, US, vol. 2523, 2002, pages 187-197, XP001176599 ISSN: 0302-9743
- GOLIC J ET AL: "Multiplicative Masking and Power Analysis of AES" CRYPTOGRAPHIC HARDWARE AND EMBEDDED SYSTEMS (CHES 2002), 13 août 2002 (2002-08-13), - 15 août 2002 (2002-08-15) pages 198-212, XP002344149 Berlin Heidelberg
- OSWALD E ET AL: "Secure and Efficient Masking of AES - A Mission Impossible? (version 1.0)" SCA-LAB TECHNICAL REPORT SERIES, 4 juin 2004 (2004-06-04), XP002315432
- COURTOIS N ET AL: AN ALGEBRAIC MASKING METHOD TO PROTECT AES AGAINST POWER ATTACKS, [Online] XP002344150 Extrait de l'Internet: URL:eprint.iacr.org/2005/204.pdf> [extrait le 2005-09-08]

EP 1 745 366 B1

**Description**

**DOMAINE TECHNIQUE**

La présente invention concerne un procédé de sécurisation d'un ensemble électronique mettant en oeuvre un algorithme cryptographique qui utilise une quantité secrète telle qu'une clé secrète. Plus précisément, le procédé vise à réaliser une version de l'algorithme qui ne soit pas vulnérable face à un certain type d'attaques physiques telles que par exemple des attaques- dites *High-Order Differential Power Analysis* (attaques électroniques d'ordre deux ou supérieur) - qui cherchent à obtenir des informations sur la clé secrète à partir de l'étude de la consommation électrique de l'ensemble électronique au cours de l'exécution du calcul.

**PROBLEME TECHNIQUE**

1.1 Le contexte

Les algorithmes cryptographiques considérés ici utilisent une clé secrète pour calculer une information de sortie en fonction d'une information d'entrée. Des utilisations de ces algorithmes sont nombreuses : il peut s'agir d'une opération de chiffrement, de déchiffrement ou de signature ou de vérification de signature, ou d'authentification ou de non-répudiation ou autre. Actuellement de nombreuses applications basent leur sécurité sur les algorithmes cryptographiques à clef secrète tels que DES et plus récemment AES qui depuis 2000 s'impose comme le standard de chiffrement mondial [Voir Joan Daemen, Vincent Rijmen: AES proposal: Rijndael.
La dernière version est disponible sur l'Internet, http://csrc.nist.gov/encryption/aes/rijndael/Rijndael.pdf ]. Ces algorithmes cryptographiques sont étudiés en cryptographie, et les meilleures attaques connues permettent d'être confiant quant à leur sécurité. Ainsi avec ces solutions cryptographiques la sécurité se ramène essentiellement à la sécurité de la clef secrète utilisée. Malheureusement ni la sécurité d'une donnée stockée sur un PC, ni la sécurité d'un mot de passe mémorisé par un humain ne peut en aucun cas être prise au sérieux. Ainsi il est devenu indispensable de stocker des quantités secrètes dans des modules sécurisés autonomes tels que la carte à puce.

1.2 Le problème : la protection des algorithmes embarqués

Les algorithmes cryptographiques parfaitement sûrs dans le monde mathématique idéalisé ne le sont plus dans le monde réel: la carte à puce rayonne, consomme du courant, et ainsi cycle par cycle, des informations qui dépendent des quantités secrètes fuient de la carte.
Pour obtenir une réelle sécurité il faut que les données intermédiaires de l'algorithme n'apportent aucune information sur les dites quantités secrètes. De plus, de nouvelles attaques ont été mises en place [Voir les documents suivants :

P. Kocher, J. Jaffe, B. Jun, Introduction to Differential Power Analysis and Related Attacks. Technical Report, Cryptography Research Inc., 1998. Available from http://www.cryptography.com/dpa/technicat/index.html
T.S. Messerges, Using Second-Order Power Analysis to Attack DPA Resistant software. In Proceedings of CHES'2000, LNCS 1965, pp. 238-251, Springer-Verlag, 2000. :]

Ces attaques sont des attaques dits d'ordre supérieur (par exemple « la DPA d'ordre 2 »). Cela veut dire que l'attaquant combine l'information qui fuit à deux ou plusieurs moments de l'exécution de l'algorithme cryptographique. Pour se protéger contre ce type d'attaques il ne suffit plus que les données intermédiaires de l'algorithme n'apportent aucune information sur les quantités secrètes. Il faut aussi que des données de plusieurs moments d'exécution prises ensemble ne puissent être combinées dans une attaque pour obtenir une information quelconque sur les quantités secrètes.

**1.3 Les contraintes**

Une solution au problème doit non seulement protéger contre les attaques de type DPA mais doit pouvoir s'étendre à des attaques « DPA d'ordre 2 » et plus. Il faut aussi que la solution satisfasse à des contraintes raisonnables au niveau de temps d'exécution et de mémoire utilisée. Un des objectifs de la présente invention est que le temps d'exécution et la mémoire soient, par rapport à une implémentation non sécurisée, multipliés pas une petite constante, qui ne dépend ni de la taille du bloc, ni du nombre d'itérations de AES, ce que la présente invention permet d'obtenir.
La présente invention garantit la sécurité de AES contre des attaques de type DPA d'ordre 1, 2 ou supérieur, SPA et autres attaques électroniques ou par d'autres canaux cachés.
Dans ce qui suit, il est décrit une solution générale particulièrement bien adaptée à l'algorithme AES, mais également applicable aux autres algorithmes cryptographiques. Toutes les solutions connues pour ce problème ont été critiquées pour leur niveau de performance et leur utilisation mémoire, et ont été sujettes à des attaqués publiées dans la littérature.

GOLIC J ET AL: "Multiplicative Masking and Power Analysis of AES" CRYPTOGRAPHIC HARDWARE AND EMBEDDED SYSTEMS (CHES 2002), 13 août 2002 (2002-08-13), - 15 août 2002 (2002-08-15) pages 198-212 décrit un procédé de protection d'un ensemble mettant en oeuvre un processus de calcul cryptographique.

## RESUME DE L'INVENTION

La présente invention concerne un procédé de sécurisation d'un système électronique comprenant un processeur et une mémoire, mettant en oeuvre un processus de calcul cryptographique stocké dans la mémoire qui utilise une quantité secrète k et qui utilise une fonction homographique f du type :

- $f(z) = (az+b) / (cz+d)$ quand $(cz+d)$ n'est pas égal à 0 et
- $f(-d/c) = a/c$

la fonction f opérant sur des variables masquées. Le procédé consiste, pour tout k, si x est une entrée et $y = f(x+k)$ une sortie de la fonction f, pour passer directement d'une valeur masquée $x+m\_i$ (masquage additif de type XOR) à une valeur masquée $y+m\_j$, à réaliser cette opération à l'aide d'une composition de plusieurs transformations opérant sur $GF(2^k)$ avec l'adjonction de l'infini, définies sous forme $(ax+b)/(cx+d)$, et de transformations qui échangent deux points.

La présente invention concerne également le système de mise en oeuvre dudit procédé.

## MANIERE DE RÉALISER L'INVENTION

Le procédé selon l'invention vise à sécuriser un système électronique, et par exemple un système embarqué tel qu'une carte à puce mettant en oeuvre un processus de calcul cryptographique qui utilise une clé secrète. Le système électronique comprend un processeur et une mémoire. Le processus de calcul cryptographique est installé dans la mémoire, par exemple de type ROM dudit système. Le processeur dudit système exécute le processus de calcul en utilisant une clé secrète, stockée dans une zone secrète d'une mémoire, par exemple de type E2PROM.

Le procédé selon l'invention consiste à apporter une protection homographique.

On va d'abord décrire la philosophie générale de la protection.

2.1 Principe de la décomposition

Chaque système cryptographique peut être décomposé en un certain nombre d'opérations élémentaires comme addition, XOR etc..

Dans le cas de AES, on peut diviser les opérations en deux catégories :

- Les opérations dites linéaires, qu'il est facile de protéger par un masquage additif classique. Ceci est connu et n'est pas l'objet de cette invention.
- Si l'on enlève les opérations linéaires, il reste une seule opération, opération Inv de Rijndael, dérivée de l'opération d'inverse

dans un corps fini GF(256) ou similaire, avec 0 qui est envoyé sur 0. On s'intéresse uniquement à la protection de l'opération Inv.

La solution présentée s'applique aussi à d'autres opérations similaires.

2.2 Préliminaires

Soit K un corps fini. Dans le cas de AES K=GF(256).
On suppose qu'il existe une implémentation quelconque de K, ce qui revient à implémenter l'addition et la multiplication dans K. Par exemple celle définie dans [AES].

Soit Inv l'inverse modifié de Rijndael [AES], c'est à dire :

- $Inv(x) = 1/x$ dans K quand x est non nul,
- $Inv(0) = 0$.

On définit K' par ajout d'un point à K appelé infini.

Ainsi K' = K ∪ oo.

On définit Inv' comme l'opération suivante :

- Inv'(x) = 1/x dans K quand x est non nul et différent de oo,
- Inv'(0) = oo,
- Inv'(oo) = 0.

L'invention part du principe que pour calculer Inv on peut appliquer la composition de Inv' et d'une opération qui échange 0 et oo.

Soit E[a,b] une opération de K' dans K' qui échange les points a et b :

- E[a,b](x) = x quand x n'est égal ni à a ni à b,
- E[a,b](a) = b,
- E[a,b](b) = a.

2.3 Comment représenter l'opération Inv.

On a : Pour tout x dans K, (Inv n'est pas définie sur tout K') :

$$Inv(x) = Inv' ( E[0,oo](x))$$

Le principe de protection est le suivant: Inv' est membre d'un groupe stable par composition, de taille raisonnable, ce qui n'est pas le cas de Inv. Ainsi on peut pour Inv.' faire des protections qui ne peuvent pas exister pour Inv.

Ce groupe est défini comme l'ensemble des fonctions suivantes:

Pour tout 4-uplet (a,b,c,d) d'éléments de K tels que ac<>bd, on définit :

Function HOM[a,b,c,d] = la fonction suivante:

- HOM[a,b,c,d](x) = (ax+b) / (cx+d) dans K quand (cx+d) n'est pas égal à 0.
- HOM[a,b,c,d](-d/c) = oo,
- HOM[a,b,c,d](oo) = a/c.

Pour implémenter Inv on va écrire la fonction suivante K'->K' qui coïncide avec Inv sur l'ensemble K:

Inv' o E[0,oo]

Le signe « o » dénote la composition des fonctions habituelles.

Ensuite, on va écrire Inv', comme produit des fonctions homographiques :

$$Inv' = F\_1 o F\_2 o \dots o F\_n o G\_1 o \dots G\_n$$

Chacune des fonctions F_i et G_j est sous la forme HOM[a,b,c,d].

Puisque Inv' fait partie d'un groupe, cette décomposition se fait de façon arbitraire. On peut par exemple choisir au hasard 2*n-1 fonctions et recalculer la fonction qui manque pour que la composition fasse Inv'.

Ensuite on a la fonction suivante K'->K' qui coïncide avec Inv sur K :

$$F\_1 o F\_2 o \dots o F\_n o G\_1 o \dots G\_n o E[0,oo]$$

Comme toutefois dans K' toutes ces fonctions sont bijectives, on peut calculer deux points a et b tels que cette fonction soit égale à

$$F\_1 \circ F\_2 \circ \ldots \circ F\_n \circ \; E[a,b] \; \circ G\_1 \circ .. \, G\_n.$$

Ces points sont a=G_1(...G_n(0)) et b= G_1 (...G_n(oo)).

C'est ainsi que sera implémentée notre protection :

1. On va générer les F_1, F_2, ..., F_n, G_1, G_n. Chacun est décrit par 4 éléments de K, soit 4 octets dans Rijndael/AES.
2. On va calculer a et b.
3. Ensuite on va appliquer cette suite d'opérations pour calculer Inv.
4. dans AES il y a plusieurs Inv. La suite d'opérations effectuée, comme défini dans 1-3, peut varier d'un calcul à l'autre.

2.4 Comment protéger l'opération Inv.

Dans une implémentation de AES sécurisée on ne fait pas le calcul de y = Inv(x) à partir de x, mais on fait plutôt le calcul direct à partir de la valeur masquée x+m_i pour obtenir directement y+m_j, passer par des valeurs intermédiaires x et y qui donnent de l'information. On doit donc calculer la fonction

$$y = Inv(x+m\_i) + m\_j$$

Comme avec Inv, cette fonction peut être vue de multiples façons comme combinaison des opérations de base sous forme HOM[a,b,c,d]. et des échanges de deux points.

Il est conseillé même d'aller plus loin. Soit K_i une clé intermédiaire de AES. On peut protéger directement l'opération x |-> Inv (x +K_i) de même façon. Après l'échange de deux points cette opération est égale sur tout K à un certain HOM[a,b,c,d]:K'->K' dans le groupe, qui peut être décomposé de même façon que pour Inv. Dans une implémentation protégée par un masque additif on aura à décomposer la fonction :

$$x \mathrel{|{-}>} Inv (x +K\_i+m\_i) +m\_j$$

Ce qui se fait de même façon.

2.5 Améliorations

Au lieu d'une, on peut utiliser plusieurs opérations E[a,b].

Il est facile à voir que pour chaque opération HOM[a,b,c,d] on peut supposer que a est égal à 0 ou 1.

Bien que la même méthode permette aussi de protéger l'implémentation quand on utilise le masquage additif ou multiplicatif, ceci n'est pas conseillé. Ces masquages ne sont pas bijectifs ou fixent certains points, par exemple un masquage multiplicatif ne masque pas 0. Un masquage homographique quelconque sera bijectif sans défaut mais cela nécessite de stocker une de 257 valeurs, ce qui n'est pas très pratique - ne rentre pas sur 1 octet.

Ce document ne décrit pas l'ensemble de l'implémentation protégée AES.

Il cherche à décrire comment protéger le composant non-linéaire, le plus difficile à protéger. La protection de l'ensemble peut et doit comporter d'autres protections classiques et largement connues.

La présente invention concerne donc dans la forme de réalisation particulière décrite un procédé de protection d'un ensemble mettant en oeuvre un processus de calcul cryptographique qui utilise au moins une fonction Inv (Inverse dans GF(2^k) avec 0 envoyé sur 0 comme dans AES) avec des variables intermédiaires x du calcul manipulées avec un masquage additif x+m_1, avec m_i étant le masque et + étant le XOR, caractérisé en ce que, pour tout k, si x est une entrée et y = f(x+k), pour passer directement de la valeur masquée x+m_i à une valeur masquée y+m_j sans divulguer des valeurs intermédiaires, cette opération est réalisée à l'aide de la composition de plusieurs transformations opérant sur GF(2^k) avec l'adjonction de l'infini, définis sous forme (ax+b)/(cx+d), et de transformations qui échangent deux points.

Elle concerne également un système comprenant des moyens de mémorisation implémentant un processus de calcul cryptographique qui utilise la fonction Inv (Inverse dans GF(2^k) avec 0 envoyé sur 0 comme dans AES) avec des variables intermédiaires x du calcul manipulées avec un masquage additif x+m_i. avec m_i étant le masque et + étant le XOR, caractérisé en ce que, pour tout k, si x est une entrée et y = Inv(x+k), pour passer directement de la valeur masquée x+m_i à une valeur masquée y+m_j sans divulguer des valeurs intermédiaires, on va voir cette opération comme composition de plusieurs transformations opérant sur GF(2^k) avec l'adjonction de l'infini, définis sous forme (ax+b)/(cx+d), et des transformations qui échangent deux points.

## Revendications

1. Procédé de protection d'un Systéme électronique mettant en oeuvre un processus de calcul cryptographique qui utilise une fonction homographique f du type :

    • f(z)= (az+b) / (cz+d) quand (cz+d) n'est pas égal à 0 et
    • f(-d/c)=a/c

    la fonction f opérant sur des variables masquées **caractérisé en ce que**, pour tout k, si x est une entrée et y = f(x+k) une sortie de la fonction f, pour passer directement d'une valeur masquée x+m_i masquage additif de type XOR ,à une valeur masquée y+m_i, le procédé consiste à réaliser ce passage direct à l'aide d'une composition de plusieurs transformations opérant sur GF(2^k) avec l'adjonction de l'infini, définies sous forme (ax+b)/(cx+d), et de transformations qui échangent deux points.

2. Procédé selon la revendication 1, **caractérisé en ce que** l'opération f est la fonction Inv (inverse dans GF(2^k) avec 0 envoyé sur 0 comme dans AES).

3. Procédé selon l'une des revendications 1 ou 2, **caractérisé en ce que** le processus de calcul protégé est Rijndael ou AES.

4. Procédé selon l'une des revendications 1 à 3, **caractérisé en ce que** au lieu de masquage additif de x par x+m, le masquage est fait pour une opération homographique quelconque: au lieu de x on manipule la valeur de (ax+b)/(cx+d).

5. Procédé selon l'une des revendications précédentes, **caractérisé en ce que** les opérations sont implémentés par tables.

6. Procédé selon l'une des revendications précédentes utilisé pour protéger une implémentation dans une carte à puce, token USB, module cryptographique, ou autre hardware spécialisé.

7. Procédé selon l'une des revendications précédentes utilisé pour protéger une implémentation software avec « code obfuscation » (une carte à puce virtuelle).

8. Procédé selon l'une des revendications précédentes utilisé pour protéger une implémentation exécutée de façon obscurcie sur un serveur distant (un autre type de carte à puce virtuelle).

9. Système électronique comportant des moyens de stockage d'un processus de calcul, des moyens de traitement dudit processus de calcul cryptographique qui utilise une fonction homographique f du type :

    • f(z)= (az+b) / (cz+d) quand (cz+d) n'est pas égal à 0 et
    • f(-d/c)=a/c

    la fonction f opérant sur des variables masquées **caractérisé en ce qu'**il comporte des moyens permettant, pour tout k, si x est une entrée et y = f(x+k) une sortie de la fonction f, pour passer directement d'une valeur masquée x+m_i, masquage additif de type XOR, à une valeur masquée y+m_i, de réaliser ce passage direct à l'aide d'une composition de plusieurs transformations opérant sur GF(2^k) avec l'adjonction de l'infini, définies sous forme (ax+b)/(cx+d), et de transformations qui échangent deux points.

10. Programme d'ordinateur comprenant des instructions de code de programme pour l'exécution des étapes du procédé selon l'une des revendications 1 à 8 lorsque ledit programme est exécuté dans un système électronique.

**Claims**

1. Protection process for an electronic system using a cryptographic calculation procedure employing a homographic function f of the type:

   • f(z) = (az+b) / (cz+d) when (cz+d) is not equal to 0 and
   • f(-d/c) = a/c

   function f operating on masked variables **characterised** such that, for all k, if x is an input and y = f(x+k) an output of function f, to pass directly from a masked value x+m_i, XOR type additive masking, to a masked value y+m_i, the process consists of carrying out this direct passage using a composition of several transformations operating on GF(2^k) with the addition of infinity, defined in the form (ax+b)/(cx+d), and transformations that exchange two points.

2. Process according to claim 1, **characterised** such that the operation f is the Inv function (Inverse in GF(2^k) with 0 sent over 0 as in AES).

3. Process according to one of claims 1 or 2, **characterised** such that the protected calculation procedure is Rijndael or AES.

4. Process according to one of claims 1 to 3, **characterised** such that instead of additive masking of x by x+m, masking is done for any homographic operation: instead of x you manipulate the value of (ax+b)/(cx+d).

5. Process according to one of the previous claims, **characterised** such that the operations are implemented using tables.

6. Process according to one of the previous claims used to protect an implementation in a smart card, USB token, cryptographic module or other specialised hardware.

7. Process according to one of the previous claims used to protect a software implementation with "code obfuscation" (a virtual smart card).

8. Process according to one of the previous claims used to protect an implementation executed obscurely on a remote server (another type of virtual smart card).

9. Electronic system including storage capabilities for a calculation procedure, processing capabilities for the said cryptographic calculation procedure that uses a homographic function f of the type:

   • f(z) = (az+b) / (cz+d) when (cz+d) is not equal to 0 and
   • f(-d/c)= a/c

   function f operating on masked variables **characterised** such that it includes capabilities enabling, for all k, if x is an input and y = f(x+k) an output of function f, to pass directly from a masked value x+m_i, XOR type additive masking, to a masked value y+m_i, of carrying out this direct passage using a composition of several transformations operating on GF(2^k) with the addition of infinity, defined in the form (ax+b)/(cx+d), and transformations that exchange two points.

10. Computer programme including programme code instructions in order to execute the steps of the process according to one of claims 1 to 8 when the said programme is executed in an electronic system.

**Patentansprüche**

1. Verfahren zum Schutz eines elektronischen Systems zur Umsetzung eines kryptographischen Rechenprozesses mittels einer homographischen Funktion f der Art:

- f(z) = (az + b) / (cz + d) wobei (cz + d) nicht gleich 0 ist und
- f(-d/c) = a / c

wobei f eine Funktion von maskierten Variablen ist, **dadurch gekennzeichnet, dass** für jedes k, wenn x eine Eingangsgröße und y = f(x + k) eine Ausgangsgröße der Funktion f ist, das Verfahren, um direkt von einem maskierten Wert x + m_i - zusätzliche Maskierung der Art XOR - zu einem maskierten Wert y + m_i zu gelangen, darin besteht, diesen direkten Weg mit Hilfe einer Zusammenstellung mehrerer Transformationen mit GF(2^k) mit Adjunktion des Unendlichen definiert in Form von (ax + b) / (cx + d) und von transformationen, die zwei Punkte austauschen, auszuführen.

2. Verfahren gemäß Anspruch 1, **dadurch gekennzeichnet, dass** die Operation f die Funktion Inv (invers in GF (2^k) mit Projektion von 0 auf 0 wie bei AES) ist.

3. Verfahren gemäß einem der Ansprüche 1 oder 2, **dadurch gekennzeichnet, dass** das geschützte Rechenverfahren Rijndael oder AES ist.

4. Verfahren gemäß einem der Ansprüche 1 bis 3, **dadurch gekennzeichnet, dass** anstelle der zusätzlichen Maskierung von x durch x + m die Maskierung durch irgendeine homographische Operation erfolgt: anstelle von x nimmt man den Wert von (ax + b) / (cx + d).

5. Verfahren gemäß einem der vorstehenden Ansprüche, **dadurch gekennzeichnet dass** die Operationen nach Tabellen umgesetzt werden.

6. Verfahren gemäß einem der vorstehenden Ansprüche, das verwendet wird, um eine Implementierung in einer Chipkarte, einem USB-Token, einem kryptographischen Modul oder einer anderen spezialisierten Hardware zu schützen.

7. Verfahren gemäß einem der vorstehenden Ansprüche, das verwendet wird, um eine Software-Implementierung mit "Code Obfuscation" zu schützen (virtuelle Chipkarte).

8. Verfahren gemäß einem der vorstehenden Ansprüche, das verwendet wird, um eine Implementierung zu schützen, die verschleiert auf einem Remote-Server ausgeführt wird (eine andere Art der virtuellen Chipkarte).

9. Ein elektronisches System mit Mitteln zur Speicherung eines Rechenprozesses, Mitteln zur Bearbeitung des genannten kryptographischen Rechenprozesses unter Verwendung der homographischen Funktion f der Art:

- f(z) = (az + b) / (cz + d) wobei (cz + d) nicht gleich 0 ist und
- f(-d/c) = a / c

wobei f eine Funktion von maskierten Variablen ist, **dadurch gekennzeichnet, dass** es Mittel umfasst, die es, um direkt von einem maskierten Wert x + m_i - zusätzliche Maskierung der Art XOR - zu einem maskierten Wert y + m_j zu gelangen, für jedes k, wenn x eine Eingangsgröße und y = f (x + k) eine Ausgangsgröße der Funktion f ist, ermöglichen, diesen direkten Weg mit Hilfe einer Zusammenstellung mehrerer Transformationen mit GF(2^k) mit Adjunktion des Unendlichen definiert in Form von (ax + b) / (cx + d) und von Transformationen, die zwei Punkte austauschen, auszuführen.

10. Ein Computerprogramm, das Programmcodeanweisungen zur Ausführung der Schritte des Prozesses gemäß einem der Ansprüche 1 bis 8 umfasst, wenn das genannte Programm in einem elektronischen System ausgeführt wird.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **P. Kocher ; J. Jaffe ; B. Jun.** Introduction to Differential Power Analysis and Related Attacks. Technical Report. Cryptography Research Inc, 1998
- Using Second-Order Power Analysis to Attack DPA Resistant software. **T.S. Messerges.** Proceedings of CHES'2000, LNCS. Springer-Verlag, 1965, 238-251

- **GOLIC J et al.** Multiplicative Masking and Power Analysis of AES. *CRYPTOGRAPHIC HARDWARE AND EMBEDDED SYSTEMS (CHES 2002),* 13 Août 2002, 198-212